Europäisches Patentamt

European Patent Office

Office européen des brevets

(19)

(11) Veröffentlichungsnummer: **0 300 412**
**A1**

## EUROPÄISCHE PATENTANMELDUNG

(21) Anmeldenummer: 88111535.6

(22) Anmeldetag: 18.07.88

(51) Int. Cl.⁴: **G09B 23/28**

(30) Priorität: 24.07.87 DE 8710180 U
13.06.88 DE 8807672 U

(43) Veröffentlichungstag der Anmeldung:
**25.01.89 Patentblatt 89/04**

(84) Benannte Vertragsstaaten:
**AT BE CH DE ES FR GB GR IT LI LU NL SE**

(71) Anmelder: **Wehner, Arthur**
**Holunderweg 8**
**D-8012 Ottobrunn(DE)**

(72) Erfinder: **Wehner, Arthur**
**Holunderweg 8**
**D-8012 Ottobrunn(DE)**

(74) Vertreter: **von der Bey, Gerhard, Dr.**
**Auenstrasse 31a**
**D-8012 Ottobrunn(DE)**

(54) **Gerät zum Üben der Herzlungen-Wiederbelebung.**

(57) Das Gerät zum Üben der Herz-Lungen-Wiederbelebung besteht aus einem Kissen (1), einem Ausgleichskissen (2) und einem Druckkontrollgerät (3), die mittels Schlauchleitungen (4; 5; 6) miteinander zu einem in sich geschlossenen System verbunden sind, wobei die Schlauchleitung (4) zwischen dem Kissen (1) und dem Ausgleichskissen (2) mittels eines Absperrhahns (7) verschliessbar ist und wobei an einer Stelle des Systems ein verschliessbarer Füllstutzen (8) angebracht ist.

EP 0 300 412 A1

Fig. 1

## "Gerät zum Üben der Herz-Lungen-Wiederbelebung."

Die Erfindung betrifft ein Gerät zum Üben der Herz-Lungen-Wiederbelebung.

Übungs- und Prüfgeräte zum Erlernen der Herzdruckmassage und der Lungentätigkeit sind an sich bekannt. Sie bestehen in der Regel aus einer naturgetreuen Puppe oder auch deren Torso, bei der die Herzdruckmassage kombiniert mit der Atemspende durch den Ausbilder vorgeführt wird. Im Anschluß daran müssen die Auszubildenden an der Puppe oder an dem Torso die Übungen wiederholen, wobei entsprechend der Anzahl der vorhandenen Puppen oder Torsi die Übenden vom Ausbilder angeleitet werden. Hierbei bestimmt der Ausbilder den Ablauf der Übung, indem er den gewünschten Ausgangsrhythmus auswählt und in einen Simulator eingibt. Wird die Defibrillation korrekt durchgeführt, erscheint automatisch ein neuer, ebenfalls vom Ausbilder vorprogrammierter Rhythmus auf dem EKG-Gerät. Der Ausbilder hat es dabei in der Hand, einen Rhythmuswechsel stattfinden zu lassen oder ihn zu verhindern, wenn der Übende falsch reagiert hat oder wenn die Reaktion des Helfers auf unvorhergesehene kardiale Ereignisse geprüft werden soll. In gleicher Weise wie die Erlernung des richtigen Zeittakts bei der Herzdruckmassage wird der zutreffende Druck auf das Herz geübt. Derartige Geräte sind jedoch sehr aufwendig und kompliziert und daher kostspielig. Aus diesen Gründen ist gewöhnlich für einen Ausbildungskursus nur ein Gerät vorhanden, und den Übenden verbleibt nur eine verhältnismäßig kurze zeit zum Erlernen und Üben.

Der Erfinder hat sich daher die Aufgabe gestellt, ein Gerät zum Üben der Herz-Lungen-Wiederbelebung zu entwickeln, das nicht nur einfacher in der Bedienung und kosteneinsparender ist, sondern auch den Lernenden und Übenden in beliebiger Anzahl während des Ausbildungskursus zur Verfügung gestellt werden kann, so daß außerdem die Möglichkeit gegeben ist, daß der Übende jederzeit auch ohne Ausbilder in der Lage ist, die richtigen Druck- und Rhythmusverhältnisse selbst zu erlernen und stets kontrollieren zu können.

Die Lösung dieser Aufgabe sieht nun ein Gerät zum Üben der Herz-Lungen-Wiederbelebung vor, das das kennzeichnende Merkmal aufweist, daß es aus einem mit einer Flüssigkeit gefüllten Kissen aus elastischem, flüssigkeitsdichtem Material und einem daran angebrachten Steigrohr besteht, dessen eines Ende in das Innere des Kissens ragt und dessen anderes Ende mit einem Verschluß versehen ist, wobei in dem Steigrohr ein Schwimmer angeordnet ist.

Auf das Kissen wird der Druck durch den Lernenden oder Übenden ausgeübt. Zur Einstellung eines gewünschten Druckes dient das Ausgleichskissen. Um eine gleichmäßige Druckverteilung sowohl durch den Lernenden oder Übenden als auch den Druckausgleich zu erzielen, sind die Oberflächen von Kissen und Ausgleichskissen mit Platten aus starrem Material versehen, die vorzugsweise den Formen des Kissens und des Ausgleichskissens angepaßt sind, jedoch im Durchmesser etwas kleiner gehalten sind. Zur Einstellung des Drucks beim Ausgleichskissen werden in der Regel Gewichte verwendet, so daß der Durchmesser des Ausgleichskissens kleiner als der des Kissens gehalten werden kann. Zweckmäßigerweise wird als Durchmesser für die Platte des Kissens ein Durchmesser gewählt, der etwas größer als eine normale Handfläche ist. Da das System möglichst eine gleiche Höhe aufweisen soll, um es bequem beispielsweise in einem Koffer unterzubringen, hat es sich als besonders vorteilhaft herausgestellt, daß das Verhältnis des Volumens des Kissens zu dem Volumen des Ausgleichskissens etwa 10 : 1 beträgt. Selbstverständlich können auch andere Verhältnisse gewählt werden, wenn zum Beispiel die Druckverteilung bei einem Kind erprobt werden soll, wobei Volumenverhältnisse in der Größenordnung von 5 : 1 ausreichend sind.

Nach einer bevorzugten Ausführungsform kann das Ausgleichskissen in einem Behältnis angeordnet sein, das Ausnehmungen für die Schlauchleitungen, die mit dem Ausgleichskissen verbunden sind. aufweist. Es ist nicht unbedingt erforderlich, das Ausgleichskissen mit dem Boden des Behältnisses fest zu verbinden. Das Behältnis ist rund und weist am oberen, offenen Ende ein Schraubgewinde auf, in das ein mit einem entsprechenden Gegengewinde versehener Stopfen eingreift, der eine Handhabe zur einfacheren Bedienung aufweist.

Diese Ausführungsform hat den Vorteil, daß durch Eindrehen des Stopfens der Druck auf die Platte des Ausgleichskissens variabler gestaltet werden kann, als dies durch Aufsetzen eines Gewichts der Fall ist.

In Weiterentwicklung dieses bekannten Geräts zum Üben der Herz-Lungen-Wiederbelebung ist gefunden worden, daß die in der bevorzugten Ausführungsform beschriebene Ausgestaltung einer variablen Druckeinstellung des Ausgleichskissens verbessert und gleichzeitig deutlicher erkennbar gemacht werden kann.

Diese besonders bevorzugte Ausführungsform weist das kennzeichnende Merkmal auf, dass das mit mindestens einer aus starrem Material bestehenden Platte ausgerüstete Ausgleichskissen, das mit den Schlauchleitungen zum Kissen und zum Druckkontrollgerät verbunden ist, zwischen einer oberen Begrenzungsplatte und einer in einem feststehenden Abstand davon befindlichen unteren Begrenzungsplatte angeordnet ist und daß zwischen einer der Platten des Ausgleichskissens und einer der Begrenzungsplatten ein Überdruckkissen vorgesehen ist, das einerseits über eine Schlauchleitung, die mit einem Absperrventil versehen ist, mit einem Druckbeaufschlagungsball und andererseits über eine Schlauchleitung mit einer auf eine Druckvorwahlanzeigevorrichtung einwirkenden Kammer verbunden ist.

Die Druckvorwahlanzeigevorrichtung ist vorzugsweise auf dem gleichen Zapfen beziehungsweise auf der gleichen Welle wie die Anzeigevorrichtung drehbar gelagert, kann aber auch getrennt von der Anzeigevorrichtung angeordnet sein.

Bei dieser Ausführungsform kann es vorteilhaft sein, um insbesondere die als Bälge ausgeführten Kammern vor einer Beschädigung zu schützen, das Druckkontrollgerät in ein Behältnis einzubauen, in das der Balg beziehungsweise die Kammer der Druckvorwahlanzeigevorrichtung nach der Erfindung einbezogen oder abgesondert ist, beispielsweise durch eine Trennwand.

In analoger Weise, wie das Überdruckkissen und das Ausgleichskissen - bei einer Betrachtungsweise von oben - übereinander angeordnet sind, kann auch die Kammer der Druckvorwahlanzeigevorrichtung über der zum Ausgleichskissen gehörenden Kammer der Anzeigevorrichtung angeordnet sein, wobei die beiden jeweiligen Schlauchleitungen parallel übereinander geführt sein können. Gegebenenfalls können die beiden Kammern auch nebeneinander angeordnet sein, insbesondere dann wenn auch die Druckvorwahlanzeigevorrichtung getrennt von der Anzeigevorrichtung angebracht sein soll.

In allen Fällen sind die Kammern mit denjenigen Seitenwänden, in die die jeweiligen Schlauchleitungen einmünden, auf einer Basis (Grundplatte, zum Beispiel Bodenplatte eines Koffers) fest verbunden. Diese Basis kann auch die vergrößerte beziehungsweise verlängerte untere Begrenzungsplatte sein, die - je nach Anordnung - mit dem Ausgleichskissen oder mit dem Überdruckkissen in Berührung steht.

Der Druckbeaufschlagungsball kann ein üblicher mit einem Lufteinlassventil versehener Gummiball, wie er bei Blutdruckmeßgeräten oder Parfümzerstäubern bekannt ist, oder auch ein üblicher Blasebalg sein.

Das System kann mit einem Gas, wie Stickstoff, Kohlendioxid oder bevorzugt mit Luft, aber auch mit einer Flüssigkeit, wobei Wasser bevorzugt ist, gefüllt sein. Gas und Flüssigkeit werden durch den Füllstutzen in das System eingebracht, der danach verschlossen wird.

Das Kissen, das Ausgleichskissen und das Überdruckkissen und auch die im Druckkontrollgerät angeordneten Kammern, insbesondere die Bälge, sind aus elastischem, gas- und/der feuchtigkeitsdichtem (Flüssigkeitsdichtem) Material gefertigt und bestehen beispielsweise aus natürlichen oder synthetischen Elastomeren, wie Naturgummi oder Silicongummi, oder aus Kunststoffen, wie Polyäthylen, weichgestelltem Polyvinylchlorid oder Polysulfonen.

Die Schlauchleitungen können aus beliebigen Materialien bestehen, die nicht dehnbar, aber biegsam sind.

Größe und Form des Kissens können beliebig gewählt sein, doch ist eine Größe vorteilhaft, die in etwa einem menschlichen Brustkorb entspricht. Als Form wird eine runde oder ovale Ausbildung bevorzugt, doch kann das Kissen auch quaderförmig sein. Das Druckkontrollgerät, das auch als Manometer bezeichnet werden kann, weist vorzugsweise zwei Kammern auf, von denen eine über eine Schlauchleitung mit dem Kissen und von denen die andere Kammer über eine andere Schlauchleitung mit dem Ausgleichskissen verbunden ist. Beide Kammern sind voneinander mittels einer Scheidewand getrennt, so daß an dieser Stelle des Systems kein ungehinderter Durchtritt des Gases oder der Flüssigkeit vom Kissen zum Ausgleichskissen erfolgen kann. Die Kammern im Druckkontrollgerät weisen bevorzugt die Form eines Balges auf, der aus den eingangs genannten Materialien besteht.

Die Scheidewand ist ausserhalb der Kammern beweglich gelagert. Hierbei kann an einem Ende der Scheidewand eine Ausnehmung für einen Zapfen vorgesehen sein, der im Druckkontrollgerät verankert ist. Es ist auch möglich, das eine Ende der Scheidewand in nach oben und unten gerichteten Zapfen auslaufen zu lassen, die ihrerseits in Ausnehmungen im Druckkontrollgerät in Ausnehmungen drehbar gelagert sind.

Das andere Ende der Scheidewand ist vorzugsweise starr mit einer Anzeigevorrichtung, wie einem Zeiger verbunden. Es ist auch möglich, die Scheidewand in eine solche Anzeigevorrichtung auflaufen zu lassen.

Zur Füllung des Systems mit einem Gas oder einer Flüssigkeit ist ein verschließbarer Füllstutzen am System angeordnet, der sich am Kissen, am Ausgleichskissen oder an einer der Schlauchleitungen befinden kann. Bei einer Flüssigkeitsfüllung ist es zweckmäßig, an beiden Kammern Entlüftungsventile anzuordnen, um restliches Gas oder Luft aus dem System zu entfernen. Die bevorzugte Füllung des Systems erfolgt jedoch mit Luft.

In der Zeichnung sind schematisch zwei Ausführungsformen des Geräts nach vorliegender Erfindung veranschaulicht.

Fig. 1 stellt eine schematische Darstellung des Geräts zum Üben der Herz-Lungen-Wiederbelebung in Draufsicht dar;

Fig. 2 zeigt in schematischer Darstellung ein Gerät nach der besonders bevorzugten Ausführungsform, jedoch ohne obere und untere Begrenzungsplatten;

Fig. 3 ist eine Teilansicht von Fig. 2 in Seitenansicht gemäss A.

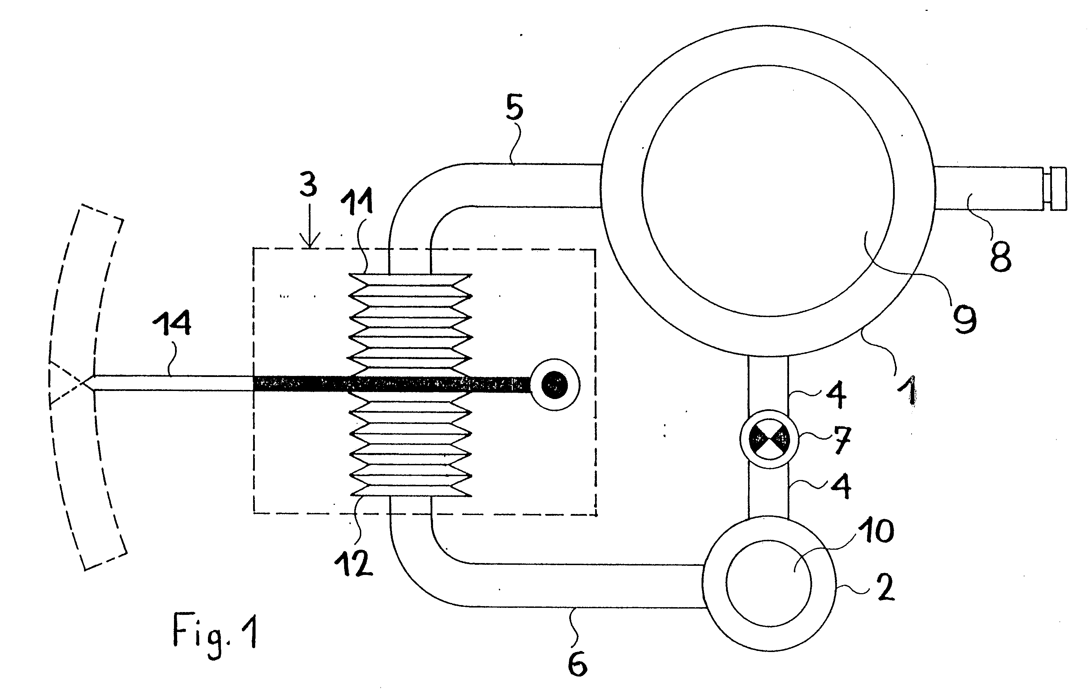

Gemäss Fig. 1 ist am Kissen 1 der verschliessbare Füllstutzen 8 angebracht. Das Kissen 1 weist eine runde Form auf, und auf seiner Oberfläche ist die Platte 9 befestigt. Vom Kissen 1 führt die Schlauchleitung 4 zum Ausgleichskissen 2. Die Schlauchleitung 4 ist durch den Absperrhahn 7 unterbrochen. Vom Ausgleichskissen 2, dessen Oberfläche mit der Platte 10 versehen ist, führt die Schlauchleitung 6 zur Kammer 12 des Druckkontrollgeräts 3. Vom Kissen 1 führt die Schlauchleitung 5 zur anderen Kammer 11 des Druckkontrollgeräts 3. Zwischen den Kammern 11 und 12 ist die Scheidewand 13 angeordnet, die in die Anzeigevorrichtung 14 ausläuft.

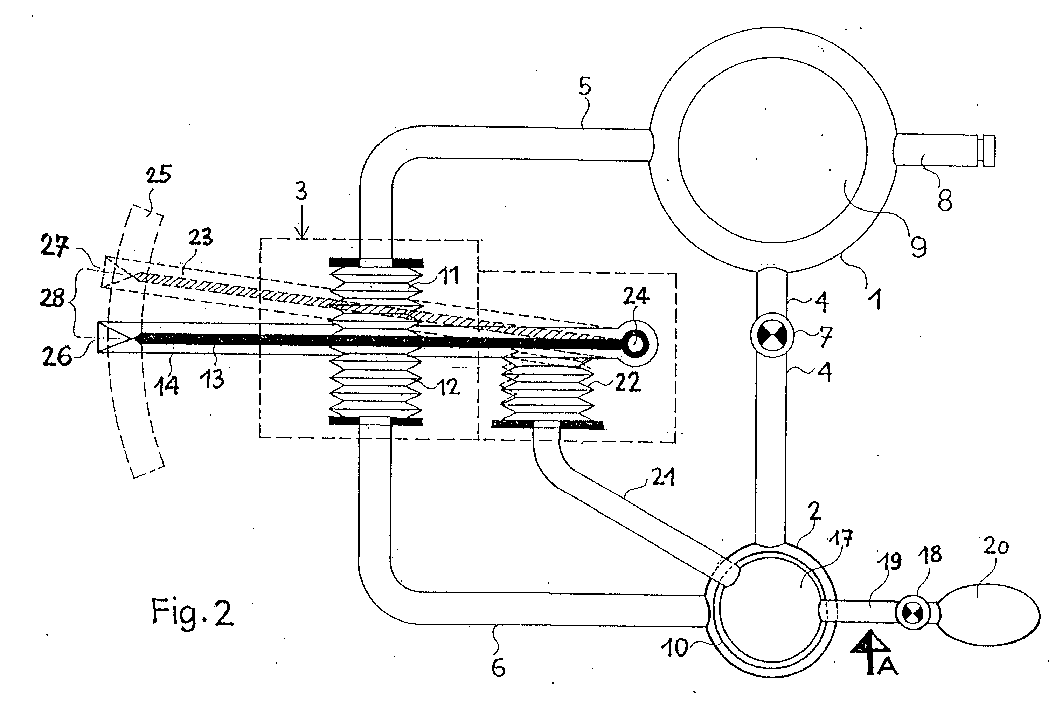

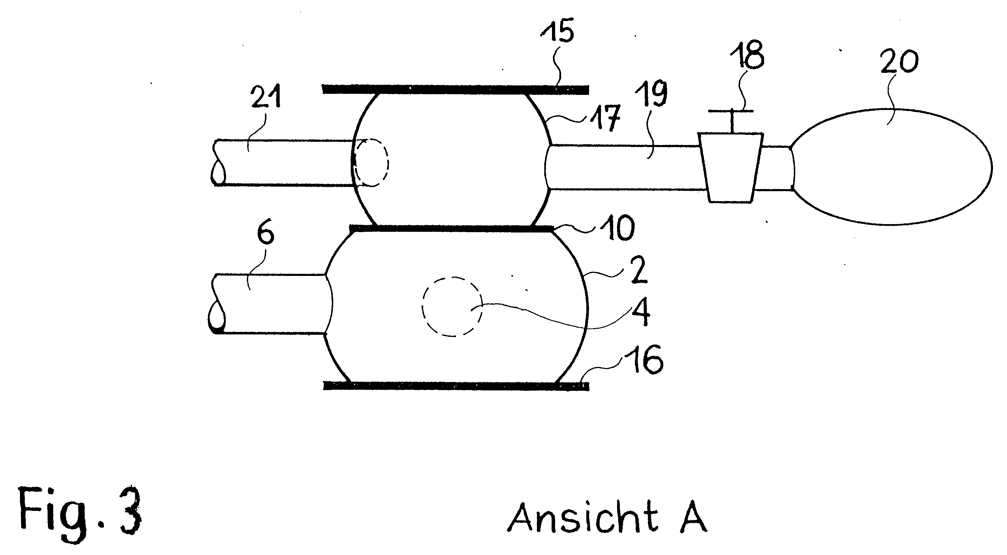

Gemäss Fig. 2 ist auf der Platte 10 des Ausgleichskissens 2 das Überdruckkissen 17 angeordnet. Zwischen der oberen Begrenzungsplatte 15 (siehe auch Fig. 3) und der unteren Begrenzungsplatte 16, die in einem feststehenden Abstand voneinander angeordnet sind, befinden sich das Überdruckkissen 17 und das Ausgleichskissen 2. Vom Überdruckkissen 17 führt die Schlauchleitung 19, die von dem Absperrventil 18 unterbrochen ist, zum Druckbeaufschlagungsball 20. Die weitere Schlauchleitung 21 vom Überdruckkissen 17 führt zur Kammer 22, die ebenfalls wie die Kammern 11 und 12 als Bälge ausgeführt sind. Die Kammer 22 ist mit der Druckvorwahlanzeigevorrichtung 23 verbunden, die auf der Welle 24 beziehungsweise auf dem Zapfen 24 drehbar gelagert ist. Auf der gleichen Welle 24 beziehungsweise auf dem gleichen Zapfen 24, jedoch unterhalb der Druckvorwahlanzeigevorrichtung 23, ist auch die Anzeigevorrichtung 14 drehbar gelagert. Die Spitzen der Anzeigevorrichtung 14 und der Druckvorwahlanzeigevorrichtung 23 übergreifen beziehungsweise untergreifen den Meßteilkreis 25 in der Ruhestellung 26.

Nachstehend wird die Arbeitsweise des Geräts nach Fig. 1 näher erläutert.

Bei geöffnetem Absperrhahn 7 wird durch den ebenfalls geöffneten Füllstutzen 8 Luft in das System eingeblasen. Nach vollständiger Füllung wird zunächst der Füllstutzen 8 verschlossen und danach der Absperrhahn 7 geschlossen. Das System ist nun gleichmäßig mit Luft gefüllt. Im Anschluß daran wird auf die Platte 10 des Ausgleichskissens 2 das gewählte Gewicht gelegt. Dadurch wird ein Überdruck in demjenigen Teil des Systems erzeugt, der vom Absperrhahn 7 über die Schlauchleitung 4, das Ausgleichskissen 2 und die Schlauchleitung 6 zur Kammer 12 reicht. Der Druck drückt die Scheidewand 13 in Richtung auf die Kammer 11 und die Anzeigevorrichtung bewegt sich nach einer Seite. Bei Ruhestellung kann dieser Ausschlag als Ausgangspunkt Null für die Druckanwendung durch den Lernenden oder Übenden angesehen werden.

Das Gerät ist nun betriebsbereit.

Der Lernende oder Übende drückt nun mit der Handfläche auf die Oberfläche der Platte 9, die auf dem Kissen 1 angeordnet ist. Durch den Druck wird das Gas im Kissen 1 durch die Leitung 5 auf die Kammer 11 und auf die Scheidewand 13 übertragen, deren Anzeigevorrichtung mehr oder weniger je nach dem angewendeten Druck sich gegenläufig bewegt. Durch Markierungen am Ende der Anzeigevorrichtung hat man es in der Hand, den Druck mehr oder weniger stark bis zur gewünschten Kontrollmarke anzuwenden. Durch wiederholtes Drücken mit der Handfläche gewinnt man nach und nach das Gefühl für den jeweils anzuwendenden Druck und auch den zeitlichen Abstand zwischen zwei Druckanwendungen. Bei einem Volumenverhältnis von 10 : 1 von Kissen 1 zum Ausgleichskissen 2 erfordert beispielsweise eine Belastung der Platte 10 des Ausgleichskissens 2 mit 1kg einen Druck mittels Hand auf die Oberfläche der Platte 9 des Kissens 1 von etwa 10kg. Durch Verminderung des Gewichts auf 0,5 kg auf die Platte 10 benötigt man nur einen Druck von etwa 5 kg auf die Platte 9, den man bei Kindern anwendet.

Sodann wird die Arbeitsweise des Geräts nach Fig. 2 und Fig. 3 näher erläutert.

Bei geöffnetem Absperrhahn 7 wird durch den ebenfalls geöffneten Füllstutzen 8 Luft in das System eingeblasen. Nach vollständiger Füllung wird zunächst der Füllstutzen 8 verschlossen und danach der Absperrhahn 7 geschlossen. Das System ist nun gleichmäßig mit Luft gefüllt. Im Anschluß daran wird bei geöffnetem Absperrventil 18 mittels des Druckbeaufschlagungsballs 20 Luft über die Schlauchleitung 19 in das Überdruckkissen 17 und weiter durch die Schlauchleitung 21 in die Kammer 22 gepumpt, die den Druck auf die Druckvorwahlanzeigevorrichtung 23 überträgt. Dadurch wandert der Zeiger der Druckvorwahlanzeigevorrichtung 23 in die gestrichelt dargestellte Lage und markiert auf dem Meßteilkreis 25 einen bestimmten Wert, der beliebig gewählt und beziehungsweise oder der auf dem Meßteilkreis 25 angegeben sein kann und als Druckausgangsstellung 27 oder als Übungsstellung anzusehen ist.

Durch die Druckbeaufschlagung des Überdruckkissens 17 wird gleichzeitig auch ein Druck über die Platte 10 auf das Ausgleichskissen 2 ausgeübt. Dadurch wird ein Überdruck vom Ausgleichskissen 2 über die Schlauchleitung 7 einerseits und über die Schlauchleitung 6 zur Kammer 12 andererseits erzeugt. Dieser Druck drückt auf die Scheidewand 13 in Richtung auf die Kammer 11, wodurch sich die Anzeigevorrichtung 14 aus der Ruhestellung 26 in Richtung auf die Druckausgangsstellung 27 der Druckvorwahlanzeigevorrichtung 23 bewegt. Es ist besonders vorteilhaft, wenn die elastisch verformbaren Teile, wie das Ausgleichskissen 2, das Überdruckkissen 17 und die Kammern 12 und 22 so beschaffen sind, daß die beiden Spitzen der Anzeigevorrichtung 14 und der Druckvorwahlanzeigevorrichtung 23 nach der Druckbeaufschlagung deckungsgleich sind.

Der gewählte Anschlag beziehungsweise die Druckausgangsstellung 27 wird als Ausgangspunkt für den Druckanwendungsbereich 28 durch den Lernenden oder Übenden auf das Kissen 1 angesehen.

Das Gerät ist nun betriebsbereit.

Der Lernende oder Übende drückt mit der Handfläche auf die Oberfläche der Platte 9, die auf dem Kissen 1 angeordnet ist. Durch den Druck wird das Gas im Kissen 1 durch die Leitung 5 auf die Kammer 11 und auf die Scheidewand 13 übertragen, deren Anzeigevorrichtung 14 sich je nach dem angewendeten Druck auf das Kissen 1 mehr oder weniger weit in Richtung Ruhestellung 26 und gegebenenfalls auch darüber hinaus bewegt. Durch Markierungen auf dem Meßteilkreis 25 hat man es in der Hand, den angewendeten Druck zu bestimmen und gegebenenfalls durch Kontrollmarkierungen festzulegen. Der Lernende oder Übende hebt danach den Druck auf das Kissen 1 auf. Dadurch geht die Anzeigevorrichtung 14 in die Druckausgangsstellung 27 zurück.

Durch wiederholtes Drücken mit der Handfläche gewinnt man nach und nach das Gefühl für den jeweils anzuwendenden Druck und auch den zeitlichen Ablauf zwischen zwei Druckanwendungen.

Um den einzuhaltenden Rhythmus der einzelnen Druckfolgen zu kontrollieren, kann sich der Übende oder Auszubildende eines Taktgebers, wie eines Metronoms oder eines Tonbandes als akustisches Hilfsmittel, oder einer Lichtsignale gebenden Vorrichtung als visuelles Hilfsmittel bedienen.

Wegen der Einfachheit und der Preiswürdigkeit des Geräts nach der Erfindung können alle Teilnehmer eines Ausbildungskurses mit einem derartigen Gerät versehen werden und dadurch gleichzeitig die Übungen ausführen, die vom Ausbilder verlangt werden. Dadurch entfallen Wartezeiten für die Kursteilnehmer, was beim Vorhandensein nur einer Übungspuppe oder deren Torso in Kauf genommen werden muß. Das Übungsziel ist somit rascher erreichbar und auch intensiver erlernbar. Darüber hinaus können die Auszubildenden oder Übenden allein daheim weiterüben.

Der Vorteil einer Mitverwendung eines Tonbandes mit einprägsamer rhythmischer Musik ist in der direkten Kombination von Druckanzeige und Rhythmus - abgeleitet vom Herzrhythmus - zur Melodie zu sehen. Durch diese Kombination ist erfahrungsgemäß die beste Merkfähigkeit zu erreichen, da sich Musik oder eine Melodie leichter merken läßt als ein Herztakt.

## Ansprüche

1) Gerät zum Üben der Herz-Lungen-Wiederbelebung, **dadurch gekennzeichnet**, dass es aus einem in sich geschlossenen System aus einem Kissen (1), einem Ausgleichskissen (2) und einem Druckkontrollgerät (3) besteht, wobei das Kissen (1), das Ausgleichskissen (2) und das Druckkontrollgerät (3) mittels Schlauchleitungen (4; 5; 6) miteinander verbunden sind, dass die Schlauchleitung (4) zwischen dem Kissen (1) und dem Ausgleichskissen (2) mittels eines Absperrhahns (7) verschliessbar ist und dass an einer Stelle des Systems ein verschliessbarer Füllstutzen (8) angebracht ist.

2) Gerät nach Anspruch 1, dadurch gekennzeichnet, dass das Ausgleichskissen (2) in einem Behältnis angeordnet ist, das Ausnehmungen für die Schlauchleitungen (4; 6) aufweist und am oberen offenen Ende ein Schraubgewinde besitzt, in das ein mit einem Gegengewinde versehener Stopfen mit einer Handhabe eingreift.

3) Gerät nach Anspruch 1, dadurch gekennzeichnet, daß das mit mindestens einer aus starrem Material bestehenden Platte (10) ausgerüstete Ausgleichskissen (2), das mit den Schlauchleitungen (4) zum Kissen (1) und (6) zum Druckkontrollgerät (3) verbunden ist, zwischen einer oberen Begrenzungsplatte (15) und einer mit feststehenden Abstand davon befindlichen unteren Begrenzungsplatte (16) angeordnet ist und daß zwischen einer der Platten (10) des Ausgleichskissens (2) und einer der Begrenzungsplatten (15 oder 16) ein Überdruckkissen (17) vorgesehen ist, das einerseits über eine Schlauchleitung (19), die mit einem Absperrventil (18) versehen ist, mit einem Druckbeaufschlagungsball )20) und andererseits über eine Schlauchleitung (21) mit einer auf eine Druckvorwahlanzeigevorrichtung (23) einwirkenden Kammer (22) verbunden ist.

4) Gerät nach mindestens einem der Ansprüche 1 bis 3, dadurch gekennzeichnet, dass das Kissen (1), das Ausgleichskissen (2) und das Überdruckkissen (17) aus einem elastischen, gas- und beziehungsweise oder feuchtigkeitsdichten Material bestehen.

5) Gerät nach mindestens einem der Ansprüche 1 bis 4. dadurch gekennzeichnet, dass auf mindestens einer der miteinander in Berührung befindlichen Oberflächen des Ausgleichskissens (2) und oder des Überdruckkissens (17) und auf mindestens einer der Oberflächen des Kissens (1) Platten (10; 9) aus starrem Material angeordnet sind.

6) Gerät nach mindestens einem der Ansprüche 1 bis 5. dadurch gekennzeichnet, daß das Kissen (1), das Ausgleichskissen (2) und das Überdruckkissen (17) eine runde und/oder ovale Form aufweisen.

7) Gerät nach mindestens einem der Ansprüche 1 bis 6, dadurch gekennzeichnet, daß die Platten (9; 10) den Formen des Kissens (1), des Ausgleichskissens (2) und/oder des Überdruckkissens (17) angepaßt sind und einen Durchmesser kleiner als die Durchmesser von dem Kissen (1), dem Ausgleichskissen (2) und/oder dem Überdruckkissen (17) aufweisen.

8) Gerät nach mindestens einem der Ansprüche 1 bis 7, dadurch gekennzeichnet, daß das Volumen des Kissens (1) größer als das Volumen des Ausgleichskissens (2) ist.

9) Gerät nach mindestens einem der Ansprüche 1 bis 8, dadurch gekennzeichnet, daß bei gleicher Höhe von Kissen (1) und Ausgleichskissen (2) das Verhältnis des Volumens des Kissens (1) zum Volumen des Ausgleichskissens (2) 10 : 1 beträgt.

10) Gerät nach mindestens einem der Ansprüche 1 bis 9, dadurch gekennzeichnet, daß im Druckkontrollgerät zwei Kammern (11; 12) angeordnet sind, die mittels einer undurchlässigen Scheidewand (13) getrennt sind.

11) Gerät nach mindestens einem der Ansprüche 1 bis 10. dadurch gekennzeichnet, daß die Kammern (11; 12) als Bälge ausgebildet sind.

12) Gerät nach mindestens einem der Ansprüche 1 bis 11, dadurch gekennzeichnet, daß die eine Kammer (11) über die Schlauchleitung (5) mit dem Kissen (1) und die andere Kammer (12) über die Schlauchleitung (6) mit dem Ausgleichskissen (2) in Verbindung. stehen.

13) Gerät nach mindestens einem der Ansprüche 1 bis 12. dadurch gekennzeichnet, daß die Scheidewand (13) außerhalb der Kammern (11; 12) beweglich gelagert ist.

14) Gerät nach mindestens einem der Ansprüche 1 bis 13, dadurch gekennzeichnet, daß das freie Ende der Scheidewand (13) entweder starr mit einer Anzeigevorrichtung (14) verbunden ist oder in eine solche ausläuft.

15) Gerät nach mindestens einem der Ansprüche 1 bis 14. dadurch gekennzeichnet, daß der verschließbare Füllstutzen (8) am Kissen (1) angebracht ist.

16) Gerät nach mindestens einem der Ansprüche 1 bis 14. dadurch gekennzeichnet, daß der verschließbare Füllstutzen (8) am Ausgleichskissen (2) angebracht ist.

17) Gerät nach mindestens einem der Ansprüche 1 bis 14. dadurch gekennzeichnet, daß der verschließbare Füllstutzen (8) an einer der Schlauchleitungen (4; 5; 6) angebracht ist.

Fig. 1

EP 0 300 412 A1

Fig. 2

EP 0 300 412 A1

**Fig. 3**

Ansicht A

EP 0 300 412 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 562 925 (W. BAERMANN et al.)<br>* Spalte 4, Zeilen 19-57; Figuren *<br>--- | 1 | G 09 B 23/28 |
| A | US-A-3 276 147 (R. PADELLFORD)<br>* Spalte 3; Figuren *<br>--- | 1 | |
| A | DE-B-1 200 028 (H. HESSE)<br>----- | | |
| | | | **RECHERCHIERTE SACHGEBIETE (Int. Cl.4)**<br><br>G 09 B |

Der vorliegende Recherchenbericht wurde für alle Patentansprüche erstellt

| Recherchenort | Abschlußdatum der Recherche | Prüfer |
|---|---|---|
| DEN HAAG | 14-09-1988 | ODGERS M.L. |